# EUROPÄISCHE PATENTSCHRIFT

(11) **EP 1 813 827 B1**
(45) Veröffentlichungstag und Bekanntmachung des Hinweises auf die Patenterteilung: **17.06.2015**
(21) Anmeldenummer: 07001447.7
(22) Anmeldetag: 24.01.2007
(51) Int. Cl.: F16B 35/04, F16B 35/06, B21H 3/02, F16B 25/00

(54) **Schraube und Verfahren zum Herstellen einer Schraube**
Screw and method to manufacture a screw
Vis et méthode pour fabriquer une vis

(30) Priorität: 27.01.2006 DE 102006004555
(43) Veröffentlichungstag der Anmeldung: 01.08.2007
(73) Patentinhaber: SWG Schraubenwerk Gaisbach GmbH, 74638 Waldenburg (DE)
(72) Erfinder: Heim, Markus, 74632 Neuenstein (DE)
(74) Vertreter: Patentanwälte Ruff, Wilhelm, Beier, Dauster & Partner

(56) Entgegenhaltungen:
- EP-A- 0 558 831
- EP-A2- 0 984 177
- DE-A1- 3 427 608
- DE-A1- 19 723 634
- US-A1- 2005 265 806

## Beschreibung

Die Erfindung betrifft eine Schraube und ein Verfahren zum Herstellen einer Schraube.

Es gibt Schrauben, die einen sehr langen Schaft mit einem gewindefreien Abschnitt unterhalb des Schraubenkopfs und einem gewalzten Schraubgewinde im Bereich des vorderen, üblicherweise mit einer Spitze versehenen Endes des Schraubenschafts aufweisen. Durch das Aufwalzen des Gewindes auf den vorderen Schaftabschnitt entsteht dabei eine Kaltverfestigung, die zu einer Verbesserung der Härte der Schraube führt. Dagegen ist der gewindefreie Schaftabschnitt, der beim Walzen des Gewindes nicht verändert wird, in seinem ursprünglichen, das heißt nicht verfestigten Zustand. Schrauben dieser Art dienen beispielsweise dazu, Holz auf Holz zu verschrauben. Beim Einschrauben in harte Hölzer verdreht sich die Schraube über ihre gesamte Länge, was unter bestimmten Bedingungen auch zum Abbrechen des Schraubenschafts unterhalb des Schraubenkopfs führen kann. Eine solche Schraube bleibt dann im Holz stecken, wirkt aber bei der Befestigung nicht mehr mit.

Es ist bereits eine nicht für Holz bestimmte Schraube bekannt, die einen Gewindeabschnitt zum Einschrauben in das Material und einen zwischen dem Gewindeabschnitt und dem Schraubenkopf angeordneten zweiten Abschnitt mit einem gegenläufigen Gewinde oder umlaufenden Rippen aufweist. Der Außendurchmesser der Profilierung in dem zweiten Abschnitt ist mindestens angenähert gleich groß wie der Außendurchmesser des Schraubgewindes (US 2005/0265806). Der zweite Abschnitt ist nur dann durch Walzen umgeformt, wenn er ein Gewinde oder eine Verrippung aufweist.

Der Erfindung liegt die Aufgabe zu Grunde, eine Schraube in ihrer Anwendung zu verbessern.

Zur Lösung dieser Aufgabe schlägt die Erfindung eine Schraube mit den im Anspruch 1 genannten Merkmalen und/oder ein Verfahren zum Herstellen einer solchen Schraube mit den im Anspruch 13 genannten Merkmalen vor. Weiterbildungen der Erfindung sind Gegenstand von Unteransprüchen.

Bei der von Erfindung vorgeschlagenen Schraube ist also auch der im Stand der Technik nicht mit einem Gewinde versehene Abschnitt beispielsweise durch Walzen, Quetschen oder dergleichen kalt verformt, so dass sich auf Grund der Kaltverformung seine Festigkeit erhöht.

Eine Möglichkeit, wie eine solche Kaltverformung durchgeführt werden kann, besteht darin, dass der Halteabschnitt gewalzt wird, also ein gewalztes Profil aufweist. Dieses Profil ist so ausgestaltet, dass es nur geringfügig profiliert ist, das Verhältnis von Außendurchmesser zu Kerndurchmesser also knapp über 1 liegt.

Bei dem Profil kann es sich um ein Rillenprofil handeln, also ein Profil ohne Steigung.

Es ist aber ebenfalls möglich und liegt im Rahmen der Erfindung, dass der Halteabschnitt eine Gewindegeometrie aufweist. Darunter ist zu verstehen, dass die Vorsprünge längs einer Schraubenlinie verlaufen.

In nochmaliger Weiterbildung der Erfindung kann vorgesehen sein, dass der Halteabschnitt ein Sägezahnprofil aufweist. Dies kann sowohl für das steigungslose Rillenprofil als auch für die Gewindegeometrie gelten. Bei dem Sägezahnprofil kann insbesondere vorgesehen sein, dass die flache Flanke dem Schraubenkopfende zugewandt ist. Es kann aber auch die umgekehrte Ausbildung vorgesehen sein, wonach nämlich die flache Flanke von dem Schraubenkopfende abgewandt ist.

Es kann erfindungsgemäß vorgesehen sein, dass der Halteabschnitt auf Grund seiner Profilierung sich in dem zu haltenden Bauteil so verankert, dass die Anbringung oder Ausbildung eines eigenen Schraubenkopfs mit einer verbreiterten Form nicht erforderlich ist. Dies bedeutet, dass das Schraubenkopfende keinen Schraubenkopf aufweist, sondern nur eine Antriebsausbildung.

Bei dem Vorhandensein einer Gewindegeometrie in dem Halteabschnitt kann vorgesehen sein, dass diese Gewindegeometrie die gleiche Steigung wie das Schraubgewinde aufweist. Es ist aber auch möglich, dass die Gewindegeometrie eine unterschiedliche Steigung aufweist, die sowohl größer als auch kleiner als die Steigung des Schraubgewindes sein kann.

Es wurde bereits erwähnt, dass eine Gewindegeometrie im Halteabschnitt so schwach ausgeprägt ist, dass sie keine eigentliche Gewindewirkung erzielt. Insbesondere kann vorgesehen sein, dass der Außendurchmesser der Rillen und/oder des Gewindeprofils im Halteabschnitt kleiner als der Flanken Durchmesser des Schraubengewindes ist.

Das Verfahren zum Herstellen einer Schraube nach der Erfindung läuft so ab, dass ausgehend von einem Drahtstück ein vorderes Schraubenende beispielsweise spitz angewalzt wird, dass auf das Drahtstück dann in einem von diesem Schraubenende ausgehenden Bereich ein Gewinde aufgewalzt wird, wobei dieser Bereich dann einen Schraubabschnitt bildet. Im Bereich des gegenüberliegenden Stiftendes wird der Draht zur Bildung eines Halteabschnitts kalt verformt.

Die Schraube ist dazu bestimmt und geeignet, zum Einschrauben von Holz, insbesondere harten Holz, an einem Untergrund verwendet zu werden. Dabei wird, wenn das Schraubengewinde des von der Spitze der Schraube ausgehenden Abschnitts in den Untergrund eingreift, der gewindefreie Halteabschnitt in das zu befestigende Holz eingezogen. Während des Einziehens wird dieser Abschnitt verdreht. Da das vorher durch den Gewindeabschnitt in diesem Holz gebildete Loch nicht größer ist als der Durchmesser des gewindefreien Abschnitts, wird der Schraubenschaft durch Abbremsung des gewindefreien Abschnitts an der Wandung des Lochs auf Torsion beansprucht. Durch die durch das Kaltumformen erfolgte Verfestigung dieses Schaftabschnitts wird verhindert, dass der Schraubenschaft abbricht, was bei zum Stand der Technik gehörenden Schrauben vorkommen kann, wenn das Holz nicht vorgebohrt wird.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: die Seitenansicht einer ersten Ausführungsform einer Schraube nach der Erfindung;
- Figur 2: in vergrößertem Maßstab eine Teilansicht des Halteabschnitts der Schraube der Figur 1;
- Figur 3: einen gegenüber der Ausführungsform nach Figur 1 abgeänderten Halteabschnitt bei einer Schraube;
- Figur 4: einen der Figur 3 entsprechenden Halteabschnitt bei einer nochmals geänderten Schraube;
- Figur 5: eine der Figur 4 entsprechende Darstellung eines Halteabschnitts bei einer weiteren Schraube;
- Figur 6: die Ansicht des Halteabschnitts der Figur 5 aus einer um 90° versetzten Richtung.

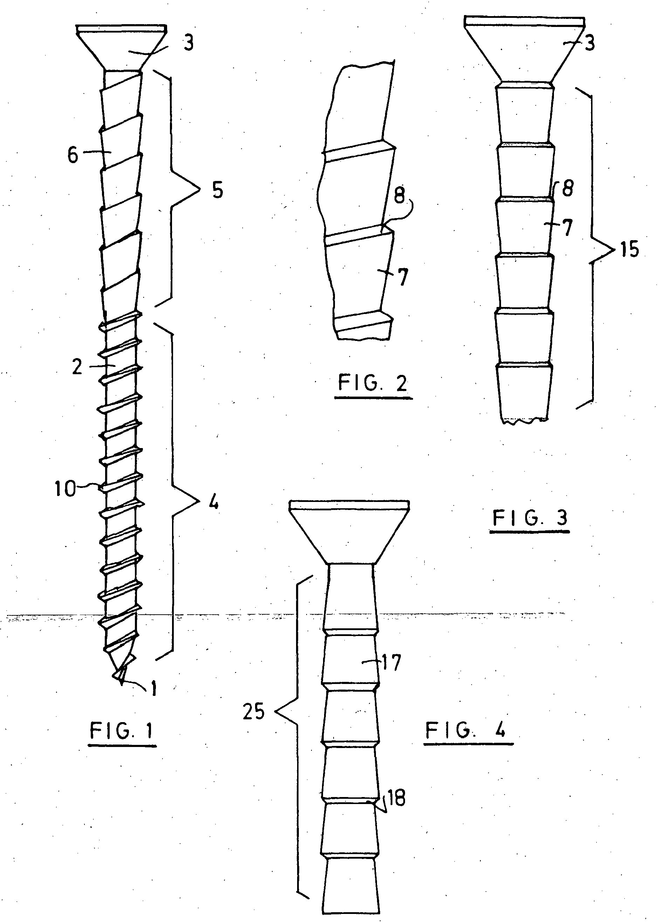

Figur 1 zeigt eine von Erfindung vorgeschlagene Schraube in Seitenansicht. Die Schraube enthält eine Schraubenspitze 1, die als Bohrspitze ausgebildet ist. Die Schraubenspitze 1 ist an einem Ende des Schraubenschafts 2 ausgebildet, an dessen anderem Ende ein Schraubenkopf 3 in Form eines Senkkopfs angeordnet ist.

Von dem vorderen die Schraubenspitze 1 bildenden Ende des Schraubenschafts aus ist ein Schraubabschnitt 4 ausgebildet, der dadurch definiert ist, dass auf den Schaft 2 ein Schraubgewinde 10 aufgewalzt ist. Von dem der Schraubenspitze 1 abgewandten Ende dieses Schraubabschnitts 4 bis zu dem Schraubenkopf 3 erstreckt sich ein Halteabschnitt 5, in dem auf den Schaft 2 der Schraube eine Gewindegeometrie 6 aufgewalzt ist. Die Gewindegeometrie ist so ausgebildet, dass das Verhältnis von Außendurchmesser zu Kerndurchmesser knapp oberhalb von 1 liegt, wobei gleichzeitig der Außendurchmesser deutlich kleiner ist als der Außendurchmesser des Schraubgewindes 10. Beim Einschrauben wirkt die Gewindegeometrien 6 im Halteabschnitt 5 praktisch nicht mit. Der einzige Zweck dieser Gewindegeometrie 6 liegt darin, dass durch das Walzen dieser Geometrie der Schraubenschaft in diesem Bereich kalt verformt und damit verfestigt wird.

Figur 2 zeigt in einer vergrößerten Einzelansicht die Kontur der Gewindegeometrie 6 im Halteabschnitt 5 der Schraube nach Figur 1. Die Gewindegeometrie weist eine Flanke 7 auf, die fast parallel zur Längsachse der Schraube verläuft. Diese flache Flanke 7 ist der Schraubenspitze 1 zugewandt. Die jeweils andere Flanke 8 der Gewindegeometrie verläuft stärker gegenüber der Schraubenlängsachse geneigt. Sie ist im dargestellten Beispiel dem Schraubenkopf 3 zugewandt. Wie man der Figur 2 auch entnehmen kann, ist das Verhältnis von Außendurchmesser zu Kerndurchmesser nur geringfügig größer als 1.

Während der Halteabschnitt 5 der Schraube nach Figur 1 eine Gewindegeometrie 6 aufweist, ist es auch möglich, dass der Halteabschnitt 15 eine Rillenkontur aufweist, siehe Figur 3. Wiederum ist die flachere Flanke 7 der Schraubenspitze 1 und die steilere Flanke 8 dem Schraubenkopf 3 zugewandt. Das Verhältnis von Außendurchmesser zu Kerndurchmesser der Rillengeometrie nach Figur 3 ist im wesentlichen dem Verhältnis der Ausführungsform nach Figur 1 und 2 gleich.

Es ist auch möglich und liegt im Rahmen der Erfindung, dass die Gewindegeometrie 6 und/oder die Rillengeometrie der Figur 3 umgekehrt orientiert sind, so dass also die steilere Flanke 18 der Schraubenspitze 1 und die flachere Flanke 17 dem Schraubenkopf 3 zugewandt ist. Dies ist in Figur 4 dargestellt.

Während bei den dargestellten Ausführungsformen im Halteabschnitt die Gewindegeometrie 6 und/oder die Rillengeometrie so gewählt sind, dass diese bei dem Einschraubvorgang praktisch nicht mitwirken, ist es auch denkbar, beispielsweise bei der Ausführungsform nach Figur 4 das Verhältnis von Außendurchmesser zu Kerndurchmesser zu vergrößern, so dass der Halteabschnitt 25 beim Einschrauben der Schraube in das zu befestigende Bauteil eingezogen wird und sich dort selbsttätig verankert. In diesem Fall könnte auf einen eigenen Schraubenkopf 3 verzichtet werden. Dann könnte zum Antrieb eine Vertiefung in dem Schraubenkopfende ausreichen, also dem Ende der Schraube, das der Schraubenspitze 1 abgewandt ist.

Selbstverständlich sind auch Kombinationen der unterschiedlichen Gewindegeometrie und Rillengeometrien mit unterschiedlicher Orientierung und mit unterschiedlichen Verhältnissen von Kerndurchmesser zur Außendurchmesser möglich und liegen im Rahmen der Erfindung.

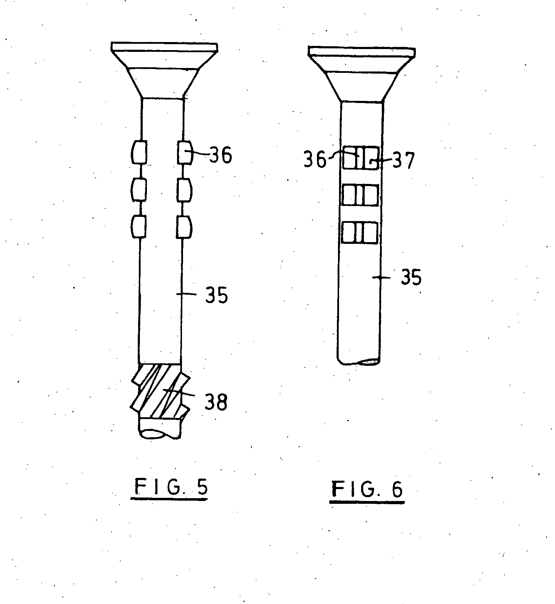

Die in den Figuren 5 und 6 dargestellte Ausführungsform unterscheidet sich in ihrem Halteabschnitt 35 in der Weise, dass dort keine Rillen oder Windungen gewalzt sind, sondern dass dort durch ein Querfließpressen eine Kaltverformung und dadurch Verfestigung hergestellt ist. Durch die Querfließpressung sind sechs Vorsprünge 36 hergestellt, die radial nach außen vorspringen und beidseits von Abflachungen 37 umgeben sind. Die einzelnen Vorsprünge 36 sind diametral zueinander angeordnet. In axialer Richtung liegen auf jeder Seite drei derartige Vorsprünge hintereinander. Diese Art der Kaltverformung kann ebenfalls beim Walzen mit hergestellt werden. Zusätzlich kann zwischen dem eigentlichen Schraubgewinde und dem Halteabschnitt 35 ein Fräsabschnitt 38 ausgebildet sein.

## Patentansprüche

1. Schraube, mit
einem Schraubenkopfende,
einem Schraubenschaft (2),
einem vorderen Schraubenende,
einen Schraubgewinde (10), das
sich über einen an dem vorderen Ende der Schraube beginnenden Schraubabschnitt (4) des Schraubenschafts (2) erstreckt, sowie mit
einem kein Schraubgewinde aufweisenden Halteabschnitt (5, 15, 25) des Schraubenschafts (2), wobei
der Halteabschnitt (5, 15, 25) beim Walzen kalt umgeformt ist wobei
das Profil des Halteabschnitt (5, 15, 25) ein Verhältnis von Außendurchmesser zu Kerndurchmesser des Schafts (2) knapp über 1 aufweist.

2. Schraube nach Anspruch 1, bei der der Halteabschnitt (5, 15,25) ein gewalztes Profil aufweist.

3. Schraube nach Anspruch 2, bei der das Profil ein Rillenprbfil ist.

4. Schraube nach Anspruch 2, bei der das Profil eine Gewindegeometrie (6) aufweist.

5. Schraube nach einem der vorhergehenden Ansprüche, bei der der Halteabschnitt (5, 15, 25) ein Sägezahnprofil aufweist.

6. Schraube nach Anspruch 5, bei der die flachere Flanke (7) dem Schraubenkopfende (3) zugewandt ist.

7. Schraube nach Anspruch 5, bei der die flachere Flanke (7) von dem Schraubenkopfende (3) abgewandt ist.

8. Schraube nach einem der vorhergehenden Ansprüche, bei der das Schraubenkopfende keinen verbreiteten Schraubenkopf (3) aufweist.

9. Schraube nach einem der Ansprüche 4 bis 8, bei der das Gewindeprofil (6) im Halteabschnitt (5) die gleiche Steigung wie das Schraubgewinde (10) aufweist.

10. Schraube nach einem der Ansprüche 4 bis 8, bei der das Gewindeprofil (6) im Halteabschnitt (5) eine andere Steigung als das Schraubgewinde (10) aufweist.

11. Schraube nach einem der vorhergehenden Ansprüche, bei der der Außendurchmesser der Rillen und/oder des Gewindeprofils (6) im Halteabschnitt (5, 15, 25) kleiner als der Flankendurchrttesser des Schraubgewindes (10) ist.

12. Schraube nach einem der vorhergehenden Ansprüche, bei der der Halteabschnitt (35) durch Querfließpressung kalt verformt ist.

13. Verfahren zum Herstellen einer Schraube nach einem der Ansprüche 1-12, mit den Verfahrensschritten:
an einem Drahtstück wird ein vorderes Schraubenende angewalzt,
auf das Drahtstück wird in einem von den vorderen Schraubenende ausgehenden Bereich zur Bildung eines Schraubabschnitts (4) ein Schraubgewinde (10) aufgewalzt,
in einem von dem dem vorderen Schraubenende abgewandten Ende des Stifts ausgehenden Bereich wird der Draht zur Bildung eines Halteabschnitts (5, 15, 25) durch Walzen kalt verformt, wobei
das Verhältnis von Außendurchmesser zu Kerndurchmesser im Bereich des Halteabschnitt (5, 15, 25) knapp über 1 liegt.

14. Verfahren nach Anspruch 13, bei dem an dem Ende des Halteabschnitts (5, 15, 25) ein Schraubenkopf (3) angeformt wird.

15. Verfahren nach Anspruch 13 oder 14, bei dem auf den Halteabschnitt (5, 15, 25) zur Kaltverformung ein Profil aufgewalzt wird.

16. Verfahren nach einem der Ansprüche 13 bis 15, bei dem auf den Halteabschnitt (15, 25) ein Rillenprofil aufgewalzt wird.

17. Verfahren nach einem der Ansprüche 13 bis 16, bei dem auf den Halteabschnitt (5) eine Gewindegeometrie (6) aufgewalzt wird.

18. Verfahren nach einem der Ansprüche 13 bis 17, bei dem auf den Halteabschnitt (35) durch Querfließpressung einzelne Vorsprünge (36) aufgewalzt werden.

19. Verwendung einer Schraube nach einem der Ansprüche 1 bis 12 zum Anschrauben von Holz, insbesondere hartem Holz an einen Untergrund, wobei der Halteabschnitt beim Einziehen in das zu befestigende Holz diesem Holz gegenüber verdreht wird.

## Claims

1. Screw, comprising
a screw head end,
a screw shaft (2),
a front screw end,
a screw thread (10) which
extends over a screw section (4) of the screw shaft (2) starting on the front end of the screw, and comprising
a retaining section (5, 15, 25) of the screw shaft (2) not provided with a screw thread, wherein
the retaining section (5, 15, 25) is cold-worked during rolling, wherein
the profile of the retaining section (5, 15, 25) has a ratio of outer diameter to core diameter of the shaft (2) of just more than 1.

2. Screw according to claim 1, wherein the retaining section (5, 15, 25) has a rolled profile.

3. Screw according to claim 2, wherein the profile is a grooved profile.

4. Screw according to claim 2, wherein the profile has a thread geometry (6).

5. Screw according to any one of the preceding claims, wherein the retaining section (5, 15, 25) has a saw-toothed profile.

6. Screw according to claim 5, wherein the flatter flank (7) is facing the screw head end (3).

7. Screw according to claim 5, wherein the flatter flank (7) is facing away from the screw head end (3).

8. Screw according to any one of the preceding claims, wherein the screw head end is not provided with an enlarged screw head (3).

9. Screw according to any one of the claims 4 to 8, wherein the thread profile (6) in the retaining section (5) has the same pitch as that of the screw thread (10).

10. Screw according to any one of the claims 4 to 8, wherein the thread profile (6) in the retaining section (5) has a pitch differing from that of the screw thread (10).

11. Screw according to any one of the preceding claims, wherein the outer diameter of the grooves and/or of the thread profile (6) in the retaining section (5, 15, 25) is smaller than the flank diameter of the screw thread (10).

12. Screw according to any one of the preceding claims, wherein the retaining section (35) is cold-worked using transverse impact extrusion.

13. Method to manufacture a screw according to any one of the claims 1 to 12, comprising the method steps:
rolling a front screw end on a length of wire,
rolling a screw thread (10) on the length of wire in a portion starting from the front screw end for forming a screw section (4),
cold-working the wire by rolling in a portion starting from the end of the nail that is facing away from the front screw end for forming a retaining section (5, 15, 25),
wherein
the ratio of outer diameter to core diameter in the vicinity of the retaining section (5, 15, 25) is just more than 1.

14. Method according to claim 13, wherein a screw head (3) is formed on the end of the retaining section (5, 15, 25).

15. Method according to claim 13 or 14, wherein a profile is rolled on the retaining section (5, 15, 25) for cold-working.

16. Method according to any one of the claims 13 to 15, wherein a grooved profile is rolled on the retaining section (15, 25).

17. Method according to any one of the claims 13 to 16, wherein a thread geometry (6) is rolled on the retaining section (5).

18. Method according to any one of the claims 13 to 17, wherein discrete projections (36) are rolled on the retaining section (35) using transverse impact extrusion.

19. Use of a screw according to any one of the claims 1 to 12 for screwing wood, in particular hard wood, on a substrate, wherein during moving into the wood to be fastened the retaining section is twisted in relation to said wood.

## Revendications

1. Vis, comprenant
une extrémité de tête de vis,
une tige de vis (2),
une extrémité de vis avant,
un filetage de vis (10), lequel
s'étend sur une portion de vis (4) de la tige de vis (2) commençant au niveau de l'extrémité avant de la vis, ainsi
qu'une portion de fixation (5, 15, 25) de la tige de vis (2) ne présentant pas de filetage de vis,
la portion de fixation (5, 15, 25) étant façonnée à froid par laminage,
le profil de la portion de fixation (5, 15, 25) présentant un rapport du diamètre extérieur au diamètre de coeur de la tige (2) juste supérieur à 1.

2. Vis selon la revendication 1, dans laquelle la portion de fixation (5, 15, 25) présente un profil laminé.

3. Vis selon la revendication 2, dans laquelle le profil est un profil rainuré.

4. Vis selon la revendication 2, dans lequel le profil présente une géométrie filetée (6).

5. Vis selon l'une quelconque des revendications précédentes, dans laquelle la portion de fixation (5, 15, 25) présente un profil en dents de scie.

6. Vis selon la revendication 5, dans laquelle le flanc plus plat (7) est tourné vers l'extrémité de tête de vis (3).

7. Vis selon la revendication 5, dans laquelle le flanc plus plat (7) est opposé à l'extrémité de tête de vis (3).

8. Vis selon l'une quelconque des revendications précédentes, dans laquelle l'extrémité de tête de vis ne présente pas de tête de vis élargie (3).

9. Vis selon l'une quelconque des revendications 4 à 8, dans laquelle le profil fileté (6) présente, dans la portion de fixation (5), le même pas que le filetage de vis (10).

10. Vis selon l'une quelconque des revendications 4 à 8, dans laquelle le profil fileté (6) présente, dans la portion de fixation (5), un pas différent de celui du filetage de vis (10).

11. Vis selon l'une quelconque des revendications précédentes, dans laquelle le diamètre extérieur des rainures et/ou du profil fileté (6) dans la portion de fixation (5, 15, 25) est inférieur au diamètre de flanc du filetage de vis (10).

12. Vis selon l'une quelconque des revendications précédentes, dans laquelle la portion de fixation (35) est formée à froid par extrusion latérale.

13. Procédé de fabrication d'une vis selon l'une quelconque des revendications 1 à 12, comprenant les étapes de procédé suivantes :
une extrémité de vis avant est formée par roulage sur une pièce filiforme,
un filetage de vis (10) est formé par laminage sur la pièce filiforme dans une région partant de l'extrémité de vis avant pour former une portion de vis (4),
le fil est formé à froid par laminage pour former une portion de fixation (5, 15, 25) dans une région partant de l'extrémité de la tige opposée à l'extrémité de vis avant,
le rapport du diamètre extérieur au diamètre de coeur dans la région de la portion de fixation (5, 15, 25) étant juste supérieur à 1.

14. Procédé selon la revendication 13, dans lequel une tête de vis (3) est façonnée à l'extrémité de la portion de fixation (5, 15, 25).

15. Procédé selon la revendication 13 ou 14, dans lequel un profil est formé par laminage sur la portion de fixation (5, 15, 25) pour le formage à froid.

16. Procédé selon l'une quelconque des revendications 13 à 15, dans lequel un profil rainuré est formé par laminage sur la portion de fixation (15, 25).

17. Procédé selon l'une quelconque des revendications 13 à 16, dans lequel une géométrie filetée (6) est formée par laminage sur la portion de fixation (5).

18. Procédé selon l'une quelconque des revendications 13 à 17, dans lequel des saillies individuelles (36) sont formées par laminage sur la portion de fixation (35) par extrusion latérale.

19. Utilisation d'une vis selon l'une quelconque des revendications 1 à 12 pour le vissage de bois, en particulier de bois dur contre un subjectile, la portion de fixation, lors du vissage dans le bois à fixer, étant tournée par rapport à ce bois.
